# EUROPÄISCHE PATENTSCHRIFT

(11) **EP 3 153 936 B1**
(45) Veröffentlichungstag und Bekanntmachung des Hinweises auf die Patenterteilung: **22.08.2018**
(21) Anmeldenummer: 16189751.7
(22) Anmeldetag: 20.09.2016
(51) Int. Cl.: G05B 9/02

(54) **SICHERHEITSSCHALTERKASKADE**
SAFETY SWITCH CASCADE
CASCADE DE COMMUTATEURS DE SÉCURITÉ

(30) Priorität: 05.10.2015 DE 102015116899
(43) Veröffentlichungstag der Anmeldung: 12.04.2017
(73) Patentinhaber: SICK AG, 79183 Waldkirch (DE)
(72) Erfinder: Schwarz, Adrian, 79215 Elzach (DE); Kok Heng Phay, Victor, Singapur 507082 (SG); Geeta, Shinde, Singapur 689527 (SG)

(56) Entgegenhaltungen:
- EP-A1- 2 026 156
- EP-A1- 2 720 094
- EP-A1- 2 720 414

## Beschreibung

Die vorliegende Erfindung betrifft eine Sicherheitsschalterkaskade mit Sicherheitsschaltern zum Überwachen von Zugängen eines Automatisierungssystems gemäß den Merkmalen des Anspruchs 1.

Herkömmliche Zugänge, die aus dem ortsfesten Teil, wie z. B. Maschinengestell, Türgestell, Türrahmen, Maschinenplatte oder Haltewinkel, und dem bewegbaren Teil, wie z.B. Türen, Klappen oder Hauben, bestehen und zusammen einen sicheren Zugang zu dem Automatisierungssystem gewährleisten, müssen durch Sicherheitsschalter auf ihren Zustand, Offen oder Geschlossen, überwacht werden.

Eine solche Überwachung wird zum einen durch elektromechanische oder zum anderen durch berührungslose Sicherheitsschalter realisiert. Hierbei besteht die Anforderung einer sicheren Positionsüberwachung des bewegbaren Teils zu dem ortsfesten Teil des Zugangs und gegebenenfalls einer Zuhaltung der beiden Teile zu detektieren und an eine übergeordnete speicherprogrammierbare Steuerung SPS zu kommunizieren. Die hierfür verwendeten Sicherheitsschalter umfassen einen Sensorteil, der ortsfest an dem ortsfesten Teil des Zugangs montiert ist, und einen Geberteil, der an dem bewegbaren Teil des Zugangs montiert ist. Wenn der Zugang geschlossen ist, befindet sich der Geberteil direkt gegenüber dem Sensorteil, so dass der Sensorteil ein Signal des Geberteils erfassen und gegebenenfalls als Freigabesignal an die SPS kommunizieren kann, damit das Automatisierungssystem starten kann.

Im geöffneten Zustand des Zugangs befindet sich der Geberteil beabstandet vom Sensorteil, so dass der Sensorteil kein Signal erfassen und auch kein Freigabesignal an die SPS kommunizieren kann. Dadurch wird das Automatisierungssystem für einen Betrieb nicht freigegeben oder, wenn sich das Automatisierungssystem bereits im Betrieb befindet, in einen sicheren Zustand überführt.

Bei einem Automatisierungssystem, das eine Mehrzahl von Zugängen aufweist, besteht die Notwendigkeit, die Sicherheitsschalter der jeweiligen Zugänge miteinander zu verschalten, so dass eine einzelne SPS das Automatisierungssystem überwachen und steuern kann. Durch die Verschaltung wird im Allgemeinen ein Verkabelungsaufwand erhöht und eine Versorgung sämtlicher Sicherheitsschalter mit Spannung erschwert. Wird eine Ausgangsspannung dermaßen groß gemacht, so dass sämtliche Sicherheitsschalter ausreichend Spannung erhalten, so ist die elektrische Belastung der ersten Sicherheitsschalter zu groß. Werden die Sicherheitsschalter parallel auf die Spannungsversorgung verschaltet, ist der Verkabelungsaufwand erneut aufwändig und teuer.

Solch ein Automatisierungssystem mit einer Sicherheitskaskade gemäß dem Oberbegriff des Anspruchs 1 ist aus EP 2 720 094 A1 bekannt, wobei alle Module der Sicherheitskaskade durch eine durch alle Module durchgeschleifte Spannungsleitung mit Spannung versorgt werden.

EP 2 720 414 A1 beschreibt ein Bussystem, das in dem Automatisierungssystem von EP 2 720 094 A1 einsetzbar ist, um die Module miteinander zu verbinden. Hierbei ist zumindest ein Einspeisemodul vorgesehen, das die aus mehreren Modulen bestehende Segmente bzw. Gruppen von Modulen verbindet. Die Spannungsleitungen der verschiedenen Segmente sind galvanisch voneinander getrennt. Das heißt, jedes Segment weist eine eigene Spannungsversorgungsverkabelung auf.

Es ist daher eine Aufgabe der vorliegenden Erfindung, eine Sicherheitsschalterkaskade mit Sicherheitsschaltern zum Überwachen von Zugängen eines Automatisierungssystems derart zu verbessern, dass eine ausreichende Spannungsversorgung der Kaskade ohne erhöhten Verkabelungsaufwand ermöglicht ist.

Die Aufgabe wird erfindungsgemäß durch eine Sicherheitsschalterkaskade mit den Merkmalen des Anspruchs 1 gelöst.

Gemäß einem bevorzugten Ausführungsbeispiel sind die Sicherheitsschalter und die Verbindungseinheit in Reihe miteinander verschaltet.

Gemäß einem weiteren bevorzugten Ausführungsbeispiel ist der erste Sicherheitsschalter mit einer Steuerung verbunden.

Weiterhin sind gemäß einem weiteren bevorzugten Ausführungsbeispiel die Sicherheitsschaltern in Reihe mit Spannung versorgt sind. Vorteilhafterweise dient die Verbindungseinheit als Einspeisungsknoten einer externen Spannung für die nachgeschalteten Sicherheitsschalter.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnung im Einzelnen erläutert. In der Zeichnung zeigt:

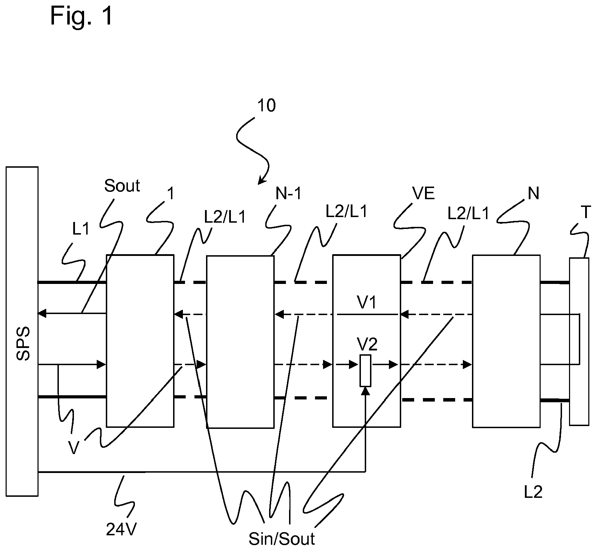

- Fig. 1: eine schematische Darstellung einer erfindungsgemäßen Sicherheitsschalterkaskade.

In der Figur 1 ist schematisch eine erfindungsgemäße Sicherheitsschalterkaskade 10 gezeigt, die eine Vielzahl von Sicherheitsschaltern 1, N-1 und N aufweist. Die Sicherheitsschalter 1, N-1 und N überwachen jeweils einen nicht dargestellten Zugang eines nicht dargestellten Automatisierungssystems.

Die Sicherheitsschalter 1, N-1 und N sind in der erfindungsgemäßen Sicherheitsschalterkaskade 10 in Reihe miteinander verschaltet. Hierbei weist ein erster Sicherheitsschalter 1 der Reihe eine erste Leitung L1 auf, mit der der erste Sicherheitsschalter 1 mit einer übergeordneten speicherprogrammierbaren Steuerung SPS verbunden ist. Der erste Sicherheitsschalter 1 weist ferner eine zweite Leitung L2 auf, die den ersten Sicherheitsschalter 1 mit einem nachgeschalteten Sicherheitsschalter N-1 verbindet.

Die zweite Leitung L2 des ersten Sicherheitsschalters 1 ist somit mit der ersten Leitung L1 des nachgeschalteten Sicherheitsschalters N-1 verbunden. Der nachgeschaltete Sicherheitsschalter N-1 weist ebenfalls eine erste Leitung L1 und eine zweite Leitung L2 auf, wobei die zweite Leitung L2 den nachgeschalteten Sicherheitsschalter N-1 mit dem weiteren nachgeschalteten Sicherheitsschalter N verbindet.

Die erfindungsgemäße Sicherheitsschalterkaskade 10 kann auf diese Weise aus beliebig vielen Sicherheitsschaltern 1, N-1 und N verschaltet sein. Hierbei ist ein Sicherheitsschalter N am Ende der Sicherheitsschalterkaskade 10 vorgesehen, der mittels seiner zweiten Leitung L2 mit einem Terminator T verbunden ist, wobei der Terminator T ein Ende der Sicherheitsschalterkaskade 10 begrenzt und eine Schleife der Sicherheitsschalterkaskade 10 schließt.

Die erste Leitung L1 der jeweiligen Sicherheitsschalter 1, N-1 und N umfasst Leitungsadern zum Aussenden von Signalen Sout des Sicherheitsschalters 1, N-1 und N und Signalen Sout der nachgeschalteten Sicherheitsschaltern N-1 und N, die über Leitungsadern der zweiten Leitung L2 empfangen werden. Ferner umfasst die erste Leitung L1 der jeweiligen Sicherheitsschalter 1, N-1 und N Leitungsadern zum Aufnehmen von Spannung V, die im Allgemeinen 24V beträgt und von der SPS in die Sicherheitsschalterkaskade 10 eingespeist wird.

Die zweite Leitung L2 der jeweiligen Sicherheitsschalter 1, N-1 und N umfasst ebenfalls Leitungsadern zum Empfangen von Signalen Sin der nachgeschalteten Sicherheitsschalter N-1 und N und zum Weiterleiten der Spannung V an dem nachgeschalteten Sicherheitsschalter N-1 und N.

Hierbei bedeuten Aussenden und Empfangen von Signalen Sout und Sin im Sinne der Erfindung, dass die Signale Sout und Sin über die Leitungsadern von einem Sicherheitsschalter 1, N-1 und N zu dem anderen angeschlossenen Sicherheitsschalter 1, N-1 und N in einer bestimmten Richtung in der erfindungsgemäßen Sicherheitsschalterkaskade 10 geleitet werden. Aufnehmen und Weiterleiten der Spannung V bedeuten ebenfalls, dass über die Leitungsadern die Spannung V in einer bestimmten Richtung in der Sicherheitsschalterkaskade 10 von einem Sicherheitsschalter 1, N-1 und N zum anderen angeschlossenen Sicherheitsschalter 1, N-1 und N geleitet wird.

Durch die Reihenschaltung der Sicherheitsschalter 1, N-1 und N in der erfindungsgemäßen Sicherheitsschalterkaskade 10 nimmt die Spannung V mit der Anzahl der geschalteten Sicherheitsschalter 1, N-1 und N ab, so dass eine ausreichende Spannungsversorgung der gesamten Sicherheitsschalterkaskade 10 gefährdet ist.

Erfindungsgemäß ist eine Verbindungseinheit VE in der Sicherheitsschalterkaskade 10 derart vorgesehen, dass die Verbindungseinheit VE zwischen zwei Sicherheitsschalter N-1 und N angeordnet ist. D.h. die Verbindungseinheit VE und die Sicherheitsschalter N-1 und N sind in Reihe miteinander verschaltet.

Die Verbindungseinheit VE umfasst eine erste innere Verschaltung V1, die die Signale des nachgeschalteten Sicherheitsschalters N empfängt und an den vorgeschalteten Sicherheitsschalter N-1 sendet bzw. weiterleitet. Ferner umfasst die Verbindungseinheit VE eine zweite innere Verschaltung V2, die die Spannung V von dem vorgeschalteten Sicherheitsschalter N-1 über eine Leitungsader an den nachgeschalteten Sicherheitsschalter N weiterleitet, wobei die zweite innere Verschaltung V2 zusätzlich mit einer externen Spannungsquelle 24V verbunden ist, so dass durch die zweite Verschaltung V2 zusätzliche Spannung 24V in die Sicherheitsschalterkaskade 10 eingespeist und an den nachgeschalteten Sicherheitsschalter N geleitet werden kann.

Da nur der erste Sicherheitsschalter 1 direkt mit der SPS verbunden ist, jeder Sicherheitsschalter 1, N-1 und N seinen Zugang überwacht, und die Verbindungseinheit VE eine zusätzliche Spannungsversorgung 24V der erfindungsgemäßen Sicherheitsschalterkaskade 10 ohne Beeinflussung der Signalübertragung und zusätzlichen Verkabelungsaufwand ermöglicht, ist eine Reihenschaltung der Sicherheitsschalter 1, N-1 und N mit ausreichender Spannungsversorgung aller angeschlossenen Sicherheitsschalter 1, N-1 und N in Reihe erzielbar.

### Bezugszeichenliste

- 10: Sicherheitsschalterkaskade
- 1, N-1, N: Sicherheitsschalter
- L1: Erste Leitung
- L2: Zweite Leitung
- Sin: Empfangene Signale
- Sout: Ausgesendete Signale
- SPS: Speicherprogrammierbare Steuerung
- T: Terminator
- V: Spannung
- VE: Verbindungseinheit
- V1: Erste Verschaltung
- V2: Zweite Verschaltung
- 24V: Zusätzliche 24V Spannungsversorgung

## Patentansprüche

1. Sicherheitsschalterkaskade (10) mit
Sicherheitsschaltern (1...N) zum Überwachen von Zugängen eines Automatisierungssystems, und
einem Terminator (T) zum Endbegrenzen der Sicherheitsschalterkaskade (10),
wobei jeder Sicherheitsschalter (1...N) eine erste Leitung (L1) und eine zweite Leitung (L2) aufweist, die erste Leitung (L1) Leitungsadern zum Aussenden von Signalen (Sout) und zum Aufnehmen von Spannung (V) umfasst, die zweite Leitung (L2) Leitungsadern zum Empfangen von Signalen (Sin) und zum Weiterleiten der Spannung (V) umfasst, **gekennzeichnet durch** zumindest eine Verbindungseinheit (VE), die zwischen zwei Sicherheitsschaltern (1...N) angeordnet ist, wobei die Verbindungseinheit (VE) eine erste Verschaltung (V1) und eine zweite Verschaltung (V2) umfasst, und wobei die erste Verschaltung (V1) zum Empfangen der Signale eines nachgeschalteten Sicherheitsschalters (N) und zum Senden der Signale des nachgeschalteten Sicherheitsschalters (N) zu einem vorgeschalteten Sicherheitsschalter (N-1) vorgesehen ist und die zweite Verschaltung (V2) einerseits dazu eingerichtet ist, mittels einer Leitungsader eine Spannung (V) von dem vorgeschalteten Sicherheitsschalter (N-1) an den nachgeschalteten Sicherheitsschalter (N) weiterzuleiten und andererseits mit einer externen Spannungsquelle verbunden ist, so dass durch die zweite Verschaltung (V2) zusätzliche Spannung in die Sicherheitsschalterkaskade (10) eingespeist und an den nachgeschalteten Sicherheitsschalter (N) geleitet werden kann.

2. Sicherheitsschalterkaskade (10) nach Anspruch 1, **dadurch gekennzeichnet, dass** die Sicherheitsschalter (1...N) und die Verbindungseinheit (VE) in Reihe miteinander verschaltet sind.

3. Sicherheitsschalterkaskade (10) nach Anspruch 1 oder 2, **dadurch gekennzeichnet, dass** der erste Sicherheitsschalter (1) mit einer Steuerung (SPS) verbunden ist.

4. Sicherheitsschalterkaskade (10) nach einem der vorhergehenden Ansprüche, **dadurch gekennzeichnet, dass** die Sicherheitsschalter (1...N) in Reihe mit Spannung (V) versorgt sind.

## Claims

1. Safety switch cascade (10) with
safety switches (1...N) for monitoring accesses of an automation system, and
a terminator (T) for terminating the safety switch cascade (10),
wherein each safety switch (1...N) having a first line (L1) and a second line (L2), the first line (L1) comprising wires for emitting signals (Sout) and for receiving voltage (V), the second line (L2) comprises wires for receiving signals (Sin) and for transmitting the voltage (V), **characterized by** at least one connection unit (VE) arranged between two safety switches (1...N), wherein the connection unit (VE) comprising a first circuit (V1) and a second circuit (V2), and wherein the first circuit (V1) is provided for receiving the signals of a downstream safety switch (N) and for transmitting the signals of the downstream safety switch (N) to an upstream safety switch (N-1) and the second circuit (V2) is arranged for transmitting a voltage (V) from the upstream safety switch (N-1) to the downstream safety switch (N) by means of a cable core on the one hand and is connected to an external voltage source on the other hand, so that additional voltage can be fed into the safety switch cascade (10) by the second circuit (V2) and conducted to the downstream safety switch (N).

2. Safety switch cascade (10) according to claim 1, **characterized in that** the safety switches (1...N) and the connection unit (VE) are connected in series with one another.

3. Safety switch cascade (10) according to claim 1 or 2, **characterized in that** the first safety switch (1) is connected to a control (PLC).

4. Safety switch cascade (10) according to one of the preceding claims, **characterized in that** the safety switches (1...N) are supplied with voltage (V) in series.

## Revendications

1. Interrupteur de sécurité en cascade (10) avec des interrupteurs de sécurité (1...N) pour surveiller les accès d'un système d'automatisation, et un terminateur (T) pour delimiter la cascade d'interrupteurs de sécurité (10), dans laquelle chaque interrupteur de sécurité (1...N) ayant une première ligne (L1) et une seconde ligne (L2), la première ligne (L1) comprenant des fils pour émettre des signaux (Sout) et pour recevoir une tension (V), la seconde ligne (L2) comprend des fils pour recevoir des signaux (Sin) et pour transmettre la tension (V), **caractérisé par** au moins une unité de connexion (VE) disposée entre deux interrupteurs de sécurité (1.....).N), dans lequel l'unité de connexion (VE) comprend un premier circuit (V1) et un second circuit (V2), et dans lequel le premier circuit (V1) est prévu pour recevoir les signaux d'un interrupteur de sécurité en aval (N) et pour transmettre les signaux de l'interrupteur de sécurité en aval (N) à un interrupteur de sécurité en amont (N-1) et le second circuit (V2) est agencé pour transmettre une tension (V) du commutateur de sécurité en amont (N-1) au commutateur de sécurité en aval (N) au moyen d'un noyau de câble d'une part et est connecté à une source de tension externe d'autre part, de manière à ce qu'une tension supplémentaire puisse être introduite dans la cascade d'interrupteurs de sécurité (10) par le deuxième circuit (V2) et conduite vers l'interrupteur de sécurité en aval (N).

2. Interrupteur de sécurité en cascade (10) selon la revendication 1, **caractérisé en ce que** les interrupteurs de sécurité (1...N) et l'unité de connexion (VE) sont connectés en série l'un à l'autre.

3. Interrupteur de sécurité en cascade (10) selon la revendication 1 ou 2, **caractérisé en ce que** le premier interrupteur de sécurité (1) est relié à une commande (PLC).

4. Interrupteur de sécurité en cascade (10) selon l'une des revendications précédentes, **caractérisé en ce que** les interrupteurs de sécurité (1...N) sont alimentés en tension (V) en série.
